Europäisches Patentamt

**European Patent Office**

Office européen des brevets

(19)

(11) Numéro de publication: **0 098 184**

**A1**

(12)

# DEMANDE DE BREVET EUROPEEN

(21) Numéro de dépôt: **83401115.7**

(22) Date de dépôt: **02.06.83**

(51) Int. Cl.³: **B 62 D 1/18**

(30) Priorité: **04.06.82 FR 8209752**

(43) Date de publication de la demande:
**11.01.84 Bulletin 84/2**

(84) Etats contractants désignés:
**DE GB IT SE**

(71) Demandeur: **REGIE NATIONALE DES USINES RENAULT**
**Boîte postale 103 8-10 avenue Emile Zola**
**F-92109 Boulogne-Billancourt(FR)**

(72) Inventeur: **Favre, Gérard**
**36, rue Pablo Picasso**
**F-78300 Trappes(FR)**

(72) Inventeur: **Falleau, Jean**
**10, rue Anne Amieux**
**F-92310 Sevres(FR)**

(74) Mandataire: **Ernst-Schonberg, Michel et al,**
**RNUR - S. 0804 B.P. 103**
**F-92109 Boulogne-Billancourt(FR)**

(54) **Arbre de direction télescopique notamment pour véhicules automobiles.**

(57) Secteur technique : arbres de direction télescopique.

Caractéristique: Arbre de direction télescopique pour véhicules automobiles qui comprend un élément extérieur (2) et un élément intérieur (3), ce dernier étant partiellement engagé dans l'élément extérieur, coaxialement à celui-ci, l'élément intérieur présentant des faces (7, 7') espacées circonférentiellement qui s'étendent suivant la longueur dudit élément et parallèlement à l'axe de l'arbre, ces faces (7, 7') s'ajustant avec un serrage prédéterminé contre les faces correspondantes (6, 6') de l'élément extérieur de sorte que l'arbre est capable de transmettre un couple dans les deux sens et est capable de se contracter sous l'effet d'un effort axial prédéterminé, caractérisé par le fait que l'une des faces de l'élément intérieur (3) est en prise constante avec des bossages (4) formés sur laparoi interne (5) de l'un des faces (6) de la paroi de l'élément extérieur (2) et que la répartition desdits bossages (4) assure la retenue axiale et le guidage de l'élément intérieur (3) dans l'élément extérieur (2).

Application principale: Construction de véhicules automobiles.

FIG.1

Arbre de direction télescopique notamment pour véhicules automobiles.

L'invention concerne un arbre de direction télescopique pour véhicules automobiles qui comprend un élément extérieur et un élément intérieur, ce dernier étant partiellement engagé dans l'élément extérieur, coaxialement à celui-ci, l'élément intérieur présentant des faces espacées circonférentiellement qui s'étendent suivant la longueur dudit élément et parallèlement à l'axe de l'arbre, ces faces s'ajustant avec un serrage prédéterminé contre les faces correspondantes de l'élément extérieur de sorte que l'arbre est capable de transmettre un couple dans les deux sens et est capable de se contracter sous l'effet d'un effort axial prédéterminé.

On connait déjà des arbres de direction capables de se raccourcir télescopiquement et qui sont maintenus dans une position de fonctionnement allongée par des goupilles de cisaillement en matière thermoplastique moulée par injection. L'inconvénient de ces arbres est qu'ils nécessitent des usinages préalables à l'injection de la matière thermoplastique et que les caractéristiques de cette dernière doivent rester constantes dans le temps. Finalement, les goupilles de cisaillement sont sujettes à subir des détériorations pendant le transport et au cours du montage de l'arbre sur le véhicule.

Le principal but de l'invention est de réaliser un arbre de direction perfectionné du type indiqué ci-dessus qui se contracte sous un effort déterminé ou dans une plage d'effort déterminée. Un autre but de l'invention est d'apporter un procédé de fabrication particulièrement simple et économique de l'arbre de direction qui garantit les conditions optimales d'assemblage sans nécessiter de machines d'usinage ni d'injection.

Selon l'invention, l'un des côtés de l'élément intérieur de l'arbre est en prise constante avec des bossages formés sur la paroi interne de l'une des faces de la paroi de l'élément extérieur et la répartition desdits bossages assure la retenue axiale et le guidage de l'élément intérieur dans l'élément extérieur.

D'autres caractéristiques et avantages de l'invention ressortiront de la description d'un mode de réalisation de l'arbre de direction en référence au dessin annexé dans lequel :

- la figure 1 est une vue en coupe longitudinale d'un arbre de direction assemblé ;

- la figure 2 est une vue de détail de la répartition des bossages sur la face de l'élément extérieur ;

- la figure 3 est une coupe transversale de l'arbre de direction au niveau des bossages ;

- la figure 4 est une courbe de déformation angulaire de l'arbre de direction sous l'action d'un couple de commande. La déformation correspond à la flexion des éléments de l'arbre et à un début de glissement angulaire relatif entre lesdits éléments.

Suivant l'invention, l'arbre de direction perfectionné pour véhicules automobiles comprend un élément extérieur 2 et un élément intérieur 3 lequel est logé à l'intérieur de l'élément extérieur et dans l'alignement de celui-ci. Des moyens sont prévus selon l'invention pour établir avec un effort axial déterminé un coulissement relatif, avec friction entre ces deux éléments.

La section transversale connue en soi de ces éléments à surface d'entraînement est telle qu'elle assure une transmission efficace du couple de rotation. En outre, ces moyens sont adaptés pour céder et permettre un déplacement télescopique limité entre ces deux éléments emboîtés, qui réduit la longueur effective de l'arbre de direction dans le cas où la contrainte axiale exercée sur l'arbre devient supérieure à une valeur de tarage des moyens de retenue. Une longue suite d'expériences, répondant au souci d'obtenir une retenue axiale suffisante des éléments de l'arbre lorsque l'effort axial est exercé dans le sens de la pénétration plus grande de l'élément intérieur dans l'élément extérieur, a permis de définir une disposition rationnelle de bossages 4 à partir du bord extrême de l'élément extérieur dans lequel est engagé l'élément intérieur sur une longueur de pénétration "1". La répartition axiale des bossages 4 assure donc le déplacement relatif des éléments de l'arbre sous l'action d'une charge axiale déterminée par le cahier de charges et un guidage correct de l'élément intérieur au cours de ce déplacement.

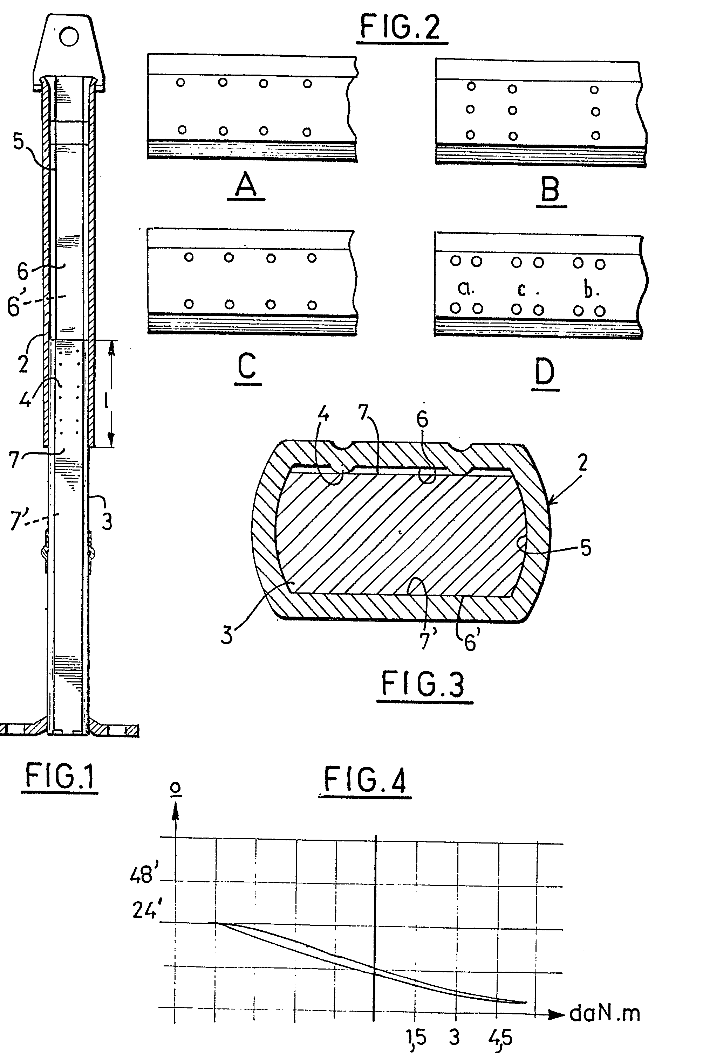

La figure 2 montre certaines répartitions expérimentées de bossages 4 repérées en 2A, 2B, 2C, 2D et le tableau ci-dessous montre les charges axiales appliquées pour obtenir un début de déplacement de l'élément intérieur 3 dans l'élément extérieur 2.

REPARTITION

| n° d'éprouvette | 2A | 2B | 2C | 2D |
|---|---|---|---|---|
| 1 | 120 | 95 | 260 | 170 |
| 2 | 150 | 105 | 190 | 200 |
| 3 | 95 | 100 | 220 | 190 |
| 4 | 170 | 90 | 210 | 210 |

La dispersion des efforts dans la répartition 2D correspond sensiblement aux exigences du cahier de charges et répond de ce fait à la réalisation préférentielle de l'invention.

La figure 3 représente une section agrandie de la colonne au niveau des bossages 4, réalisés sur la paroi interne 5 de l'élément extérieur 2. Ces bossages 4 sont réalisés par poinçonnage

sous une charge de 206 da N d'une face 6 ou 6', formée parallèlement à l'axe de l'arbre, au travers de la paroi de l'élément extérieur 2 dont l'épaisseur est 2 mm environ. Cette face 6 est tournée vers l'une des faces 7, 7' de l'élément intérieur 3, espacées circonférentiellement.

Selon la répartition 2D, les poinçonnages sont respectivement formés sur la paroi extérieure de l'une des faces 6 ou 6' en trois groupes (abc) dont les groupes extrêmes (a, b) assurent la retenue axiale des éléments 2, 3 tandis que le groupe médian (c) assure le guidage des éléments au cours de leur déplacement relatif.

Les faces telles que 6, 6' de l'élément extérieur 2 sont tournées vers les faces correspondantes 7, 7' de l'élément intérieur 3 dans le but d'assurer la transmission d'un couple dans les deux sens mais il est entendu que la répartition 2D des bossages n'est qu'une répartition intéressante mais non limitative, du fait que l'on peut utiliser plusieurs groupes de bossages répartis sur les deux faces 6 et 6' de l'élément extérieur 2.

- 5 -

REVENDICATIONS

1. Arbre de direction télescopique pour véhicules automobiles qui comprend un élément extérieur (2) et un élément intérieur (3), ce dernier étant partiellement engagé dans l'élément extérieur , coaxialement à celui-ci, l'élément intérieur présentant des faces (7, 7') espacées circonférentiellement qui s'étendent suivant la longueur dudit élément et parallèlement à l'axe de l'arbre, ces faces (7, 7') s'ajustant avec un serrage prédéterminé contre les faces correspondantes (6, 6') de l'élément extérieur de sorte que l'arbre est capable de transmettre un couple dans les deux sens et est capable de se contracter sous l'effet d'un effort axial prédéterminé, caractérisé par le fait que l'une au moins des faces (7) de l'élément intérieur (3) est en prise constante avec des bossages (4) formés sur la paroi interne (5) de l'une des faces (6) de la paroi de l'élément extérieur (2) et que la répartition desdits bossages (4) assure la retenue axiale et le guidage de l'élément intérieur (3) dans l'élément extérieur (2).

2. Arbre de direction selon la revendication 1, caractérisé par le fait que les bossages sont réalisés par poinçonnage d'une face (6, 6') de la paroi de l'élément extérieur (2) et sont répartis au moins en trois groupes dont les deux groupes (a, b) extrêmes assurent la retenue axiale de l'élément intérieur (3) dans l'élément extérieur (2) tandis que le groupe médian (c) assure le guidage desdits éléments (2, 3) au cours de leur déplacement relatif.

FIG.2

A

B

C

D

FIG.1

FIG.3

FIG.4

0098184

Office européen
des brevets

**RAPPORT DE RECHERCHE EUROPEENNE**

Numéro de la demande

EP 83 40 1115

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | US-A-3 665 777 (JENSEN) <br> * En entier * | 1 | B 62 D 1/18 |
| A | US-A-2 810 274 (WEASLER) <br> * Colonne 2, lignes 13-60; figures 1-4 * | 2 | |
| A | US-A-3 670 591 (MILTON) | | |
| A | US-A-3 815 438 (JOHNSON) | | |
| A | FR-A-2 149 144 (GKN) | | |
| A | FR-A-1 508 456 (BIRFIELD) | | |

DOMAINES TECHNIQUES RECHERCHES (Int. Cl. ³)

B 62 D
F 16 C
F 16 D
F 16 F

Le présent rapport de recherche a été établi pour toutes les revendications

| Lieu de la recherche <br> LA HAYE | Date d'achèvement de la recherche <br> 09-09-1983 | Examinateur <br> PIRIOU J.C. |
|---|---|---|